# EUROPÄISCHE PATENTSCHRIFT

(11) **EP 0 885 158 B1**
(45) Veröffentlichungstag und Bekanntmachung des Hinweises auf die Patenterteilung: **18.08.1999**
(21) Anmeldenummer: 97920494.8
(22) Anmeldetag: 04.03.1997
(51) Int. Cl.: B65G 15/36

(54) **FÖRDERGURT**
CONVEYOR BELT
BANDE CONVOYEUSE

(30) Priorität: 06.03.1996 DE 19608552; 20.05.1996 DE 19620062
(43) Veröffentlichungstag der Anmeldung: 23.12.1998
(73) Patentinhaber: PHOENIX AKTIENGESELLSCHAFT, 21079 Hamburg (DE)
(72) Erfinder: REINER, Margit, D-07422 Bad Blankenburg (DE); GROSSKREUZ, Gernot, D-07407 Rudolfstadt (DE)
(86) Internationale Anmeldenummer: DE9700389
(87) Internationale Veröffentlichungsnummer: WO9732801

(56) Entgegenhaltungen:
- DE-A- 4 113 626
- DE-A- 4 113 627
- DE-B- 1 248 543
- DE-B- 2 425 465
- US-A- 2 793 150

## Beschreibung

Die Erfindung betrifft einen Fördergurt, umfassend eine Tragseite und Laufseite aus elastomerem Werkstoff, d.h. aus Gummi oder gummiähnlichem Material, sowie einen zwischen der Tragseite und Laufseite angeordneten Zugträgerbereich aus Stahlseilen oder Stahlcorden.

Der Energieverbrauch von Gurtförderanlagen ist durch die Gestaltung des Fördergurtes beeinflußbar. Insbesondere bei Anlagen, die zur Gewinnung von Energieträgern dienen, ist dies von großer Bedeutung. Hier werden große Massenströme über große Entfernungen bewegt, so daß für diese Gurtförderer auch hohe Antriebsleistungen erforderlich sind. In der Vergangenheit hat es einige Untersuchungen dahingehend gegeben, die Bewegungswiderstände von Gurtförderanlagen zu reduzieren, wobei insbesondere auf folgende Literatur verwiesen wird:
1) DE-A-41 13 626 / DE-A-41 13 627 (TU Dresden)
2) DE-A-44 33 755 (Phoenix AG)
3) Hager, Hintz, Pattensen
   Einfluß des Gurtaufbaues auf den Energieverbrauch von Fördergurten
   Zeitschrift Braunkohle 9/93
4) Hager, Hintz
   Einfluß von Gurtwerkstoff und Gurtkonstruktion auf den Energieverbrauch von
   Förderanlagen
   DKG Fachtagung am 01.10.1992 in Fulda

Dabei wird der Bewegungswiderstand sowohl von gewählten Tragrollen und deren Konstellation (d.h. Form der Gurtmulde) als auch vom Fördergurt selbst bestimmt.

Im Hintergrund des oben zitierten Standes der Technik besteht nun die Aufgabe darin, den Verlust an innerer Arbeit (Hysterese) des auflaufenden Fördergurtes auf die Tragrolle zu reduzieren, so daß hier eine verringerte Dämpfungsarbeit eintritt. Darüber hinaus soll hinsichtlich der Rückstellkraft bzw. Arbeit des über die Tragrollen laufenden Fördergurtes ein Optimum erreicht werden.

Die Lösung der vorgenannten Aufgabe besteht nun gemäß Kennzeichen des Anspruchs 1 oder 2 darin, daß
- die Laufseite aus einer äußeren Verschleißschicht die eine Rückprallelastizität von mindestens 70 % besitzt, und aus einem zwischen dem Zugträgerbereich und der Verschleißschicht angeordneten Zwischenschicht besteht wobei innerhalb der Zwischenschicht ein Reflektor, der ein aus Kett- und Schußdrähten bestehendes Stahldrahtgewebe ist, vorhanden ist (Variante A); oder
- die Laufseite aus einer Veschleißschicht besteht, die eine Rückprallelastizität von ebenfalls mindestens 70 % besitzt, wobei innerhalb der Verschleißschicht ein Reflektor, der ein aus Kett- und Schußdrähten bestehendes Stahldrahtgewebe ist, angeordnet ist, ohne daß zwischen dem Zuträgerbereich und der Verschleißschicht eine Zwischenschicht vorhanden ist (Variante B).

Der hier angegebene Wert der Rückprallelastitzität bezieht sich bei beiden Varianten auf die Raumtemperatur.

Zweckmäßigerweise ist die Verschleißschicht und die Zwischenschicht jeweils 1-schichtig ausgebildet, wobei insbesondere die Verschleißschicht gemäß Variante A eine größere Stärke aufweist als die Zwischenschicht

Hinsichtlich des erfindungsgemäßen Reflektors, der in Verbindung mit der Aufgabenstellung nicht die Funktion eines Schlitzschutzes (DE-B-24 25 465, US-A-2 793 150) hat, gelten zweckmäßigerweise folgende Parameter:

De Kett- und Schußdrähte besitzen jeweils eine etwa gleich hohe Zugfestigkeit, und zwar insbesondere bis 300 N/mm². Außerdem weisen die Kett- und Schußdrähte das etwa gleiche Dehnverhalten auf. Das Stahldrahtgewebe besitzt eine Maschenweite bis maximal 2 mm, wobei die Kett- und Schußdrähte einen Durchmesser bis maximal 1,2 mm aufweisen. Die Kett- und Schußdrähte sind ferner vorteilhafterweise verzinkt, womit die Gummifreundlichkeit (d.h. Haftfähigkeit zum elastomeren Werkstoff) erhöht wird.
- Der Reflektor ist in unmittelbarer Nähe des Zugträgerbereiches angeordnet. Bei dieser Konstellation ist es von Vorteil, wenn die Webart des oben beschriebenen Stahldrahtgewebes in Köperbindung oder Leinwandbindung ausgelegt ist.
- Die Breite des Reflektors nimmt maximal 80 %, insbesondere maximal 75 %, der gesamten Fördergurtbreite ein, und zwar bei einem im wesentlichen gleichen Abstand zu den Außenkanten.
- Der Reflektor erstreckt sich über die gesamte Fördergurtlänge.

Die Erfindung wird nun anhand von Ausführungsbeispielen unter Bezugnahme auf eine schematische Querschnittsdarstellungen erläutert. Es zeigen:
Fig. 1 Laufseite gemäß Variante A;
Fig. 2 Laufseite gemäß Variante B.

In Verbindung mit diesen Figuren gilt folgende Bezugsziffernliste:
- 1,1': Fördergurt
- 2, 2': Tragseite
- 3,3': Zugträgerbereich
- 4, 4': Stahlseile bzw. Stahlcorde
- 5, 5': Laufseite
- 6, 6': Verschleißschicht
- 7: Zwischenschicht
- 8, 8': Reflektor
- a: Fördergurtbreite
- b: Reflektorbreite
- c: Reflektorabstand zu den Außenkanten

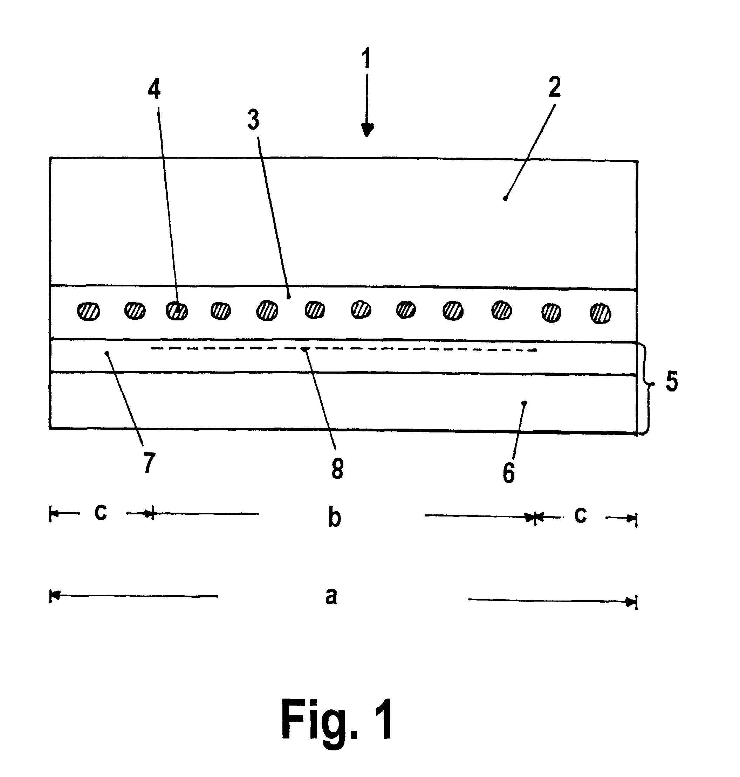

Nach Fig. 1 besteht die Laufseite (5) aus einer äußeren Verschleißschicht (6) und einer zwischen dem Zugträgerbereich (3) und der Verschleißschicht angeordneten Zwischenschicht (7), wobei innerhalb der Zwischenschicht ein Reflektor (8) vorhanden ist, der sich in unmittelbarer Nähe des Zugträgerbereiches befindet. Die Breite b des Reflektors (8) nimmt maximal 80 %, insbesondere maximal 75 %, der gesamten Fördergurtbreite a ein, und zwar bei einem im wesentlichen gleichen Abstand c zu den Außenkanten.

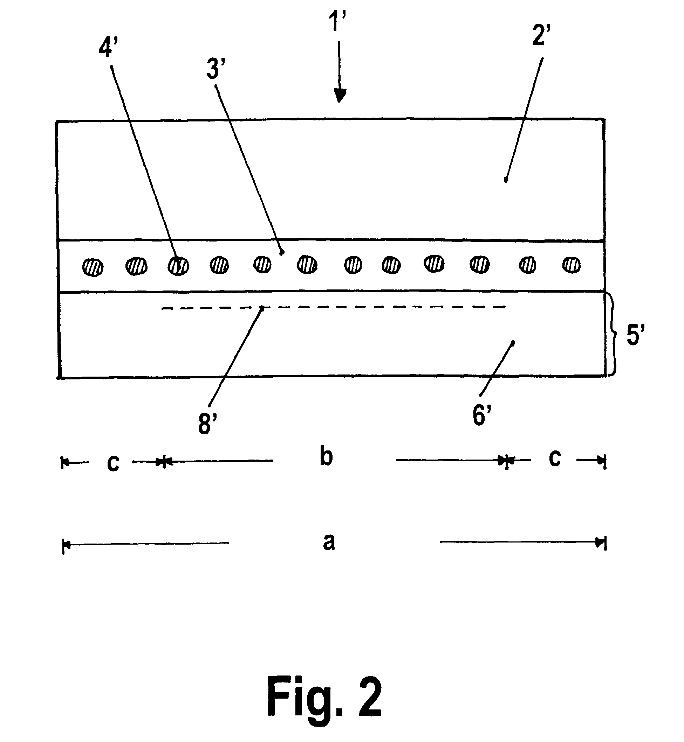

Nach Fig. 2 besteht die Laufseite (5') aus einer Verschleißschicht (6'), wobei hier innerhalb der Verschleißschicht ein Reflektor (8') angeordnet ist ohne daß zwischen dem Zugträgerbereich (3') und der Verschleißschicht (6') eine Zwischenschicht vorhanden ist Ansonsten gilt hinsichtlich des Reflektors das gleiche Anordnungspinzip, wie in Fig. 1 dargestellt.

## Patentansprüche

1. Fördergurt (1), umfassend
- eine Tragseite (2) und Laufseite (5) aus elastomerem Werkstoff sowie
- einen zwischen der Tragseite und Laufseite angeordneten Zugträgerbereich (3) aus Stahlseilen oder Stahlcorden (4),
dadurch gekennzeichnet daß
- die Laufseite (5) aus einer äußeren Verschleißschicht (6), die eine Rückprallelastizität von mindestens 70 % besitzt, und aus einer zwischen dem Zugträgerbereich (3) und der Verschleißschicht angeordneten Zwischenschicht (7) besteht, wobei innerhalb der Zwischenschicht ein Reflektor (8), der ein aus Kett- und Schußdrähten bestehendes Stahldrahtgewebe ist, vorhanden ist.

2. Fördergurt (1'), umfassend
- eine Tragseite (2') und Laufseite (5') aus elastomerem Werkstoff sowie
- einen zwischen der Tragseite und Laufseite angeordneten Zugträgerbereich (3') aus Stahlseilen oder Stahlcorden (4'),
dadurch gekennzeichnet daß
- die Laufseite (5') aus einer Zwischenschichtfreien Verschleißschicht (6') besteht, die eine Rückprallelastizität von mindestens 70 % besitzt, wobei innerhalb der Verschleißschicht ein Reflektor (8'), der ein aus Kett- und Schußdrähten bestehendes Stahldrahtgewebe ist, angeordnet ist.

3. Fördergurt nach Anspruch 1 oder 2, dadurch gekennzeichnet, daß die Verschleißschicht (6, 6') 1-schichtig ist.

4. Fördergurt nach Anspruch 1 oder 3, dadurch gekennzeichnet, daß die Zwischenschicht (7) 1-schichtig ist.

5. Fördergurt nach Anspruch 1, 3 oder 4, dadurch gekennzeichnet, daß die Verschleißschicht (6) eine größere Stärke aufweist als die Zwischenschicht (7).

6. Fördergurt nach einem der Ansprüche 1 bis 5, dadurch gekennzeichnet, daß der Reflektor (8, 8') in unmittelbarer Nähe des Zugträgerbereiches (3, 3') angeordnet ist.

7. Fördergurt nach einem der Ansprüche 1 bis 6, dadurch gekennzeichnet daß die Kett- und Schußdrahte eine etwa gleich hohe Zugfestigkeit besitzen, und zwar insbesondere bis 300 N/mm².

8. Fördergurt nach einem der Ansprüche 1 bis 7, dadurch gekennzeichnet, daß die Kett- und Schußdrähte das etwa gleiche Dehnverhalten aufweisen.

9. Fördergurt nach einem der Ansprüche 1 bis 8, dadurch gekennzeichnet, daß das Stahldrahtgewebe eine Maschenweite bis maximal 2 mm aufweist.

10. Fördergurt nach einem der Ansprüche 1 bis 9, dadurch gekennzeichnet daß die Kett- und Schußdrähte jeweils einen Durchmesser bis maximal 1,2 mm aufweisen.

11. Fördergurt nach einem der Ansprüche 1 bis 10, dadurch gekennzeichnet, daß die Kett- und Schußdrähte verzinkt sind.

12. Fördergurt nach einem der Ansprüche 1 bis 11, insbesondere in Verbindung mit Anspruch 6, dadurch gekennzeichnet, daß die Webart des Stahldrahtgewebes in Köperbindung oder Leinwandbindung ausgelegt ist.

13. Fördergurt nach einem der Ansprüche 1 bis 12, dadurch gekennzeichnet, daß die Breite b des Reflektors (8, 8') maximal 80 %, insbesondere maximal 75 %, der gesamten Fördergurtbreite a einnimmt, und zwar bei einem im wesentlichen gleichen Abstand c zu den Außenkanten.

14. Fördergurt nach einem der Ansprüche 1 bis 13, dadurch gekennzeichnet, daß sich der Reflektor (8, 8') über die gesamte Fördergurtlänge erstreckt.

## Claims

1. A conveyor belt (1) comprising
- a bearer side (2) and a running side (5) of elastic material as well as
- a tension bearer region (3) of steel ropes or steel cords (4) arranged between the bearer side and the running side;
characterised in that
- the running side (5) consists of an outer wear layer (6) which has a rebound elasticity of at least 70% and of an interlayer (7) arranged between the tension bearer region (3) and the wear layer whilst there is a reflector (8) which is a steel wire fabric consisting of warp and weft threads inside the interlayer.

2. A conveyor belt (1) comprising
- a bearer side (2') and a running side (5') of elastic material as well as
- a tension bearer region (3') of steel ropes or steel cords (4') arranged between the bearer side and the running side;
characterised in that
- the running side (5') consists of an interlayer free wear layer (6') which has a rebound elasticity of at least 70%, wherein a reflector (8') which is a steel wire fabric consisting of warp and weft threads is arranged within the wear-layer.

3. A conveyor belt as in Claim 1 or 2, characterised in that the wear layer (6, 6') is a single layer.

4. A conveyor belt as in Claim 1 or 3, characterised in that the interlayer (7) is a single layer.

5. A conveyor belt as in Claim 1, 3 or 4, characterised in that the wear layer (6) exhibits greater thickness than the interlayer (7).

6. A conveyor belt as in one of the Claims 1 to 5, characterised in that the reflector (8, 8') is arranged in the direct neighbourhood of the tension bearer region (3, 3').

7. A conveyor belt as in one of the Claims 1 to 6, characterised in that the warp and weft wires have about equal tensile strength, that is, in particular 300 N/mm².

8. A conveyor belt as in one of Claims 1 or 2, characterised in that the warp and weft wires exhibit about the same extension behaviour.

9. A conveyor belt as in one of the Claims 1 to 8, characterised in that the steel wire fabric exhibits a maximum mesh width of up to 2 mm.

10. A conveyor belt as in one of the Claims 1 to 9 characterised in that both the warp and weft wires exhibit a maximum diameter of 1.2 mm.

11. A conveyor belt as in one of the Claims 1 to 10, characterised in that the warp and weft wires are galvanized.

12. A conveyor belt as in one of the Claims 1 to 11, especially in combination with Claim 6, characterised in that the weave of the steel wire fabric is laid out in twill or basket weave.

13. A conveyor belt as in one of the Claims 1 to 12, characterised in that the width b of the reflector (8, 8') occupies a maximum of 80%, especially a maximum of 75% of the whole width a of the conveyor belt, that is, at an essentially equal distance c from the outer edges.

14. A conveyor belt as in one of the Claims 1 to 13, characterised in that the reflector (8, 8') extends over the whole length of the conveyor belt.

## Revendications

1. Bande convoyeuse (1) comprenant
- une face de support (2) et une face roulante (5) réalisées en un matériau élastomère, et
- une partie de support (3) travaillant en traction, disposée entre la face de support et la face roulante et formée par des câbles d'acier ou des câblés en acier (4),
caractérisée en ce que
- la face roulante (5) est constituée par une couche extérieure d'usure (6), qui possède une élasticité de rebond égale à au moins 70 %, et par une couche intercalaire (7) qui est disposée entre la partie de support (3) travaillant en traction et la couche d'usure, un réflecteur (8), qui est un tissu de fils d'acier constitué par des fils de chaîne et des fils de trame, étant présent à l'intérieur de la couche intercalaire.

2. Bande convoyeuse (1) comprenant
- une face de support (2') et une face roulante (5') réalisées en un matériau élastomère, et
- une partie de support (3') travaillant en traction, disposée entre la face de support et la face roulante et formée par des câbles d'acier ou des câblés en acier (4'),
caractérisée en ce que
- la face roulante (5') est constituée par une couche d'usure (6') ne comportant aucune couche intercalaire et qui possède une élasticité de rebond d'au moins 70 %, un réflecteur (8'), qui est un tissu de fils d'acier constitué par des fils de chaîne et des fils de trame, étant présent à l'intérieur de la couche d'usure.

3. Bande convoyeuse selon la revendication 1 ou 2, caractérisée en ce que la couche d'usure (6,6') est formée d'une seule couche.

4. Bande convoyeuse selon la revendication 1 ou 3, caractérisée en ce que la couche intercalaire (7) est formée d'une seule couche.

5. Bande convoyeuse selon la revendication 1, 3 ou 4, caractérisée en ce que la couche d'usure (6) possède une épaisseur supérieure à celle de la couche intercalaire (7).

6. Bande convoyeuse selon l'une des revendications 1 à 5, caractérisée en ce que le réflecteur (8, 8') est disposé à proximité directe de la partie de support (3, 3') travaillant en traction.

7. Bande convoyeuse selon l'une des revendications 1 à 6, caractérisée en ce que les fils de chaîne et de trame possèdent approximativement la même résistance à la traction, ayant une valeur atteignant notamment jusqu'à 300 N/mm².

8. Bande convoyeuse selon l'une des revendications 1 à 7, caractérisée en ce que les fils de chaîne et de trame possèdent approximativement le même comportement d'allongement.

9. Bande convoyeuse selon l'une des revendications 1 à 8, caractérisée en ce que le tissu formé de fils d'acier possède une taille de maille égale au maximum à 2 mm.

10. Bande convoyeuse selon l'une des revendications 1 à 9, caractérisée en ce que les fils de chaîne et de trame possèdent des diamètres respectifs atteignant au maximum jusqu'à 1,2 mm.

11. Bande convoyeuse selon l'une des revendications 1 à 10, caractérisée en ce que les fils de chaîne et de trame sont étamés.

12. Bande convoyeuse selon l'une des revendications 1 à 11, notamment en liaison avec la revendication 6, caractérisée en ce que le type de tissage du tissu du câblé en acier est conçu sous la forme d'une armure à fils croisés ou d'une armure unie.

13. Bande convoyeuse selon l'une des revendications 1 à 12, caractérisée en ce que la largeur b du réflecteur (8, 8') est égale au maximum à 80 % et notamment au maximum à 75 % de la largeur totale a de la bande convoyeuse, et ce avec une distance c sensiblement identique par rapport aux bords extérieurs.

14. Bande convoyeuse selon l'une des revendications 1 à 13, caractérisée en ce que le réflecteur (8, 8') s'étend sur toute la longueur de la bande convoyeuse.
